# EUROPÄISCHE PATENTSCHRIFT

(11) **EP 1 035 283 B1**
(45) Veröffentlichungstag und Bekanntmachung des Hinweises auf die Patenterteilung: **10.10.2007**
(21) Anmeldenummer: 00101829.0
(22) Anmeldetag: 29.01.2000
(51) Int. Cl.: E05B 49/00, G07C 9/00, B60R 25/04, B60R 25/00, H01Q 1/32

(54) **Elektronische Sicherungsanlage mit Authentikationselement-Bereichsbestimmung, insbesondere Fahrzeugschliessanlage**
Electronic security arrangement with range determination of an authentication element, especially vehicle locking system
Installation électronique de sécurité avec détermination de zone d'un élément d'authentification, en particulier système de fermeture d'un véhicule

(30) Priorität: 06.03.1999 DE 19909932
(43) Veröffentlichungstag der Anmeldung: 13.09.2000
(73) Patentinhaber: DaimlerChrysler AG, 70327 Stuttgart (DE)
(72) Erfinder: Geber, Michael, 72574 Bad Urach (DE); Ohle, Jörn-Marten, 71229 Leonberg (DE); Pohlmann, Andreas, 71263 Weil der Stadt (DE)

(56) Entgegenhaltungen:
- WO-A-99/02377
- DE-A- 19 827 586

## Beschreibung

Die Erfindung bezieht sich auf eine elektronische Sicherungsanlage nach dem Oberbegriff des Anspruchs 1.

Bei diesen Sicherungsanlagen mit einer oder mehreren Sicherungseinheiten, die zur Sicherung gegen unbefugten Zutritt über Zutrittselemente, wie Türen und dergleichen, und/oder unbefugte Benutzung von Fahrzeugen und anderen Objekten dienen, erzeugen Sicherungsteuermittel Sicherungssteuerbefehle für die jeweilige Sicherungseinheit in Abhängigkeit davon, ob sie über zugehörige Erkennungssensoren ein berechtigendes Authentikationselement in einem Erfassungsbereich derselben feststellen. Bei sogenannten Keyless-go-Systemen ist keine aktive Authentikationselementbetätigung durch den Benutzer erforderlich, dieser braucht das Authentikationselement lediglich mitzuführen und in den Erfassungsbereich eines Erkennungssensors zu bringen. Das Authentikationselement besteht z.B. aus einer Chipkarte, und die Sicherungssteuermittel strahlen zur Erkennung eines Authentikationselementes Abfragedatensignale über die Erkennungssensoren in deren Erfassungsbereich ab. Der Erfassungsbereich wird häufig vom Fangbereich einer Antenneneinheit definiert, die Teil des jeweiligen Erkennungssensors ist. Wenn sich ein Authentikationselement in einem Erfassungsbereich befindet, empfängt es das Abfragedatensignal und sendet ein Authentikationsanwortsignal zurück, aus dem die Sicherungssteuermittel erkennen können, daß und in welchem der Erfassungsbereiche sich das Authentikationselement befindet und ob es für das betreffende Objekt gültig ist. Die Sicherungssteuermittel erzeugen dann Sicherungssteuerbefehle zum Freigeben oder Sperren einer oder mehrerer der Sicherungseinheiten in Abhängigkeit davon, in welchem der Erfassungsbereiche das berechtigende Authentikationselement erkannt worden ist. Derartige Systeme sind z.B. als Schließanlagen und/oder Wegfahrsperren in Kraftfahrzeugen gebräuchlich. Eine Fahrzeugschließanlage dieser Art ist in der nicht vorveröffentlichten, älteren deutschen Patentanmeldung Nr. 198 39 355 beschrieben.

Ein Problempunkt bei herkömmlichen, in modernen Fahrzeugen eingebauten Keyless-go-Systemen dieser Art liegt darin, daß sich die Erfassungsbereiche der einzelnen Erkennungssensoren bzw. die Fangbereiche von deren Antenneneinheiten teilweise überlappen, schon um keine unerwünschten Totzonen entstehen zu lassen. Ein derartiges Kraftfahrzeug-Diebstahlschutzsystem mit sich überlappenden, von Fangbereichen verschiedener Antenneneinheiten gebildeten Erfassungsbereichen ist in der Patentschrift DE 195 42 441 C2 offenbart. Da andererseits häufig verschiedene Sicherungssteuerbefehle in Abhängigkeit davon erzeugt werden sollten, ob ein berechtigendes Authentikationselement nur in dem einen oder nur in dem anderen Erfassungsbereich vorliegt, wird gewünscht, diese unterschiedlichen Authentikationselementpositionen unterscheiden zu können. Dies kann herkömmlicherweise z.B. dadurch erfolgen, daß zunächst der eine Erfassungsbereich nach dem Vorhandensein eines Authentikationselementes abgefragt wird und bei positivem Abfrageergebnis anschließend der andere, mit diesem teilweise überlappende Erfassungsbereich abgefragt wird, so daß die Schließsteuermittel anschließend entscheiden können, ob sich das in einem Erfassungsbereich erkannte Authentikationselement auch im anderen Erfassungsbereich und damit im Überlappungsbereich befindet oder nicht. Die sequentielle Abfrage mehrerer Erfassungsbereiche nach einem eventuell dort befindlichen Authentikationselement ist jedoch relativ zeitintensiv und kann in ungünstigen Fällen zu unerwünschten Verzögerungen bei der Ausführung der vom Benutzer an sich gewünschten Sicherungsfunktion führen. Zudem führt diese mehrfache, sequentielle Abfrage von verschiedenen Erkennungssensoren zu einer jeweils eigenen Beantwortung derselben durch das angesprochene Authentikationselement. Da außerdem die Abfrage durch die Erkennungssensoren meist mehrfach erfolgt, beinhaltet ein herkömmlicher Authentikationselement-Suchvorgang relativ viele vom Authentikationselement zu sendende Authentikationsantwortsignale, was mit einem entsprechenden Energieverbrauch im Authentikationselement verbunden ist und z. B. die Einsatzdauer einer dortigen Batterie verkürzt.

Des Weiteren ist aus der WO 99/02377 eine elektronische Fahrzeugschließanlage mit einem als Transponder ausgebildeten Authentikationselement bekannt, das Mittel zum Zurücksenden eines Antwortsignals nach Empfang eines von einem Sender empfangenen Signals aufweist, wobei das Antwortsignal einen den jeweiligen Sender identifizierenden Antwortcode erhält.

Der Erfindung liegt als technisches Problem die Bereitstellung einer elektronischen Sicherungsanlage der eingangs genannten Art, wie z. B. in Form eines Keyless-go-Systems, zugrunde, die in relativ kurzer Zeitdauer die Feststellung ermöglicht, in welchem oder welchen der verschiedenen Erfassungsbereiche sich ggf. ein Authentikationselement befindet.

Die Erfindung löst dieses Problem durch die Bereitstellung einer elektronischen Sicherungsanlage mit den Merkmalen des Anspruchs 1. Danach wird der sensorindikative Datenprotokollbereich des Authentikationsantwortsignals aus den Kennungsdatenblöcken des oder der empfangenen Abfragedatensignale zeitrichtig und codeabhängig gebildet.

Bei dieser Sicherungsanlage beinhalten die von den Erkennungssensoren abgestrahlten Abfragedatensignale charakteristischerweise einen mit sensorspezifischer Kennungsinformation codierten (im folgenden kurz als "sensorspezifisch codiert" bezeichnet), d. h. den abstrahlenden Erkennungssensor eindeutig identifizierenden und von den anderen unterscheidenden Datenprotokollbereich. Das jeweilige Authentikationselement besitzt Mittel zur Auswertung des sensorspezifisch codierten Datenprotokollbereichs empfangener Abfragedatensignale und generiert ein zurückzusendendes Authentikationsantwortsignal, das einen sensorindikativen Datenprotokollbereich beinhaltet, der die Information enthält, von welchem oder welchen Erkennungssensoren das Authentikationselement ein Abfragedatensignal empfangen hat.

Die mit diesen Eigenschaften ausgestattete Sicherungsanlage ermöglicht einen vergleichsweise kurzen Suchvorgang der Sicherungssteuermittel nach einem eventuell in einem der Erfassungsbereiche vorliegenden Authentikationselement und hält zudem den Energieverbrauch im jeweiligen Authentikationselement relativ gering. Denn für einen Suchvorgang strahlen die Sicherungssteuermittel über die Erkennungssensoren Abfragedatensignale ab, die im sensorspezifisch codierten Datenprotokollbereich die Information mit sich tragen, von welchem Erkennungssensor sie stammen. Ein in einem oder mehreren Erfassungsbereichen liegendes Authentikationselement empfängt die Abfragedatensignale all der Erkennungssensoren, deren Erfassungsbereich die Position des Authentikationselementes umfaßt. Durch seine entsprechenden Auswertemittel ist das Authentikationselement in der Lage, aus den empfangenen Abfragedatensignalen die Identifizierungsinformation über den jeweils sendenden Erkennungssensor zu extrahieren. Es baut dann in das zu sendende Authentikationsantwortsignal die gesamte Information darüber ein, von welchen Erkennungssensoren es Abfragedatensignale erhalten hat. Durch das Senden nur dieses einen Authentikationsantwortsignals erhalten die Sicherungssteuermittel somit neben eventuellen weiteren Informationen auch diese von ihnen auswertbare Information darüber, von welchen Erfassungssensoren das Authentikationselement Abfragedatensignale empfangen konnte, d.h. innerhalb von welchem oder welchen der verschiedenen, sich teilweise überlappenden Erfassungsbereiche das Authentikationselement liegt.

Da die Länge des in die Abfragedatensignale einzubauenden, sensorspezifisch codierten Datenprotokollbereichs deutlich geringer gehalten werden kann als die restliche Länge der Abfragedatensignale, die insbesondere den eigentlichen Protokollanteil zur Authentikationsprüfung umfaßt, kann der Authentikationselement-Suchvorgang gegenüber herkömmlichen Systemen mit serieller Abfrage der verschiedenen Erfassungsbereiche deutlich verkürzt werden. Zudem ist der Energieverbrauch im Authentikationselement für die erfindungsgemäße Generierung nur eines Authentikationsantwortsignals pro Suchvorgang geringer als in Fällen, in denen das Authentikationselement, wenn es sich in einem Überlappungsbereich mehrerer Erfassungsbereiche befindet, jeweils ein eigenes Authentikationsantwortsignal auf die seriellen Abfragen von den Erkennungssensoren dieser Erfassungsbereiche abgeben muß. Bei der Schließanlage besteht die sensorspezifische Codeinformation aus einem Kennungsdatenblock, der für die verschiedenen Erkennungssensoren an verschiedenen Stellen innerhalb des sensorspezifisch codierten Datenprotokollbereichs liegt und daher in einfacher Weise zur eindeutigen Identifizierung des sendenden Erkennungssensors geeignet ist.

In weiterer Ausgestaltung befinden sich die verschiedenen Kennungsdatenblöcke ohne Überschneidung an voneinander separierten Stellen innerhalb des sensorspezifisch codierten Datenprotokollbereichs der Abfragedatensignale. Der sensorindikative Datenprotokollbereich des Authentikationsantwortsignals wird dann aus den Kennungsdatenblöcken des oder der empfangenen Abfragedatensignale zeitrichtig aufgebaut, d.h. entsprechende sensoridentifizierende Datenblöcke werden an derjenigen Stelle innerhalb des sensorindikativen Datenprotokollbereichs eingebaut, an der sich der zugehörige Kennungsdatenblock im sensorspezifisch codierten Datenprotokollbereich befand. Da die Kennungsdatenblöcke an voneinander separierten Stellen liegen, bleiben sie auch in dem Fall einzeln im sensorindikativen Datenprotokollbereich identifizierbar, in dem das Authentikationselement in einem Überlappungsbereich mehrerer Erfassungsbereiche liegt und demgemäß mehrere Kennungsdatenblöcke in den sensorindikativen Datenprotokollbereich des Authentikationsantwortsignals zeitentsprechend eingebaut werden. Durch diesen relativ einfachen Aufbau sowohl des sensorspezifisch codierten Datenprotokollbereichs der Abfragedatensignale verschiedener Erkennungssensoren als auch des sensorspezifisch codierten Datenprotokollbereichs des Authentikationsantwortsignals läßt sich der Realisierungsaufwand relativ gering halten.

Eine vorteilhafte Ausführungsform der Erfindung ist in den Zeichnungen dargestellt und wird nachfolgend beschrieben. Hierbei zeigen:
- Fig. 1: eine schematische Draufsicht auf ein Automobil mit schematisch wiedergegebenen Erfassungsbereichen von Authentikationselement-Erkennungssensoren einer elektronischen Fahrzeugschließanlage und
- Fig. 2: eine schematische Diagrammdarstellung von Abfragedatensignalen verschiedener Erkennungssensoren von Fig. 1 und eines Authentikationsantwortsignals eines berechtigenden Authentikationselementes.

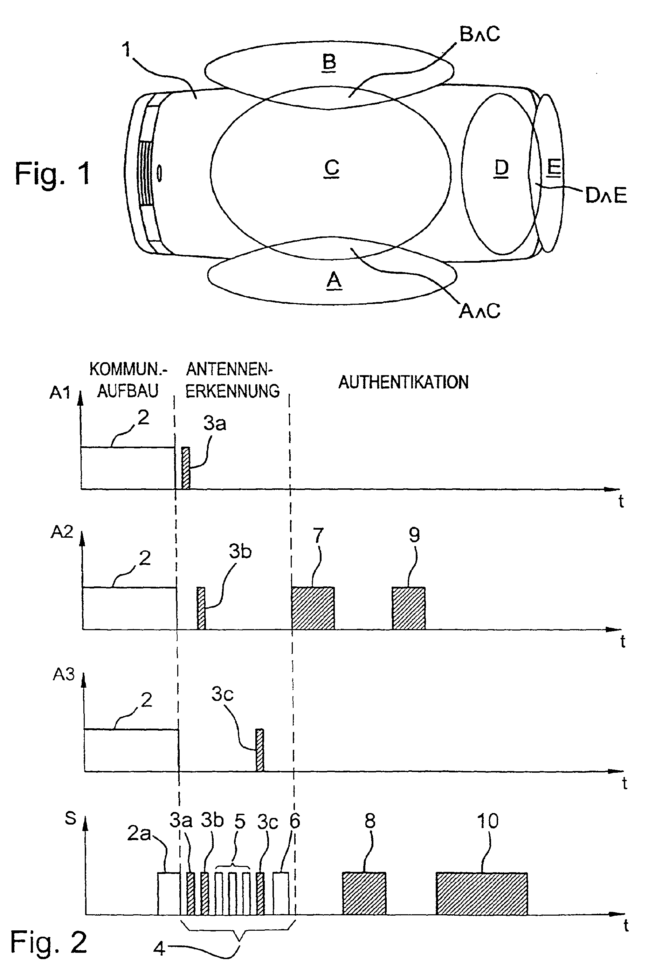

Fig. 1 zeigt schematisch ein Automobil 1 mit einer Sicherungsanlage in Form einer als Keyless-go-System ausgelegten Schließanlage. Die Schließanlage beinhaltet als Sicherungseinheiten in herkömmlicher, nicht näher gezeigter Weise je eine Schließeinheit an den Fahrzeugtüren und an einem Heckdeckel. In ebenfalls herkömmlicher, nicht näher gezeigter Weise sind den Schließeinheiten geeignete Schließsteuermittel zugeordnet, welche die benötigten Schließsteuerbefehle erzeugen, um die verschiedenen Schließeinheiten zwischen einem verriegelten Zustand, in welchem sie das Öffnen des zugehörigen Zutrittselementes, d.h. einer der Türen bzw. des Heckdeckels, sperren, und einem entriegelten Zustand umzuschalten, in welchem sie das Zutrittselement bei Betätigen eines entsprechenden Öffnungsbedienelementes, wie eines Türgriffs oder Heckdeckelöffnungsknopfs, durch den Benutzer freigeben. Der oder die zutrittsberechtigten Fahrzeugnutzer tragen ein entsprechend fahrzeugspezifisch codiertes Authentikationselement mit sich, z.B. in Form einer Chipkarte. Dessen Berechtigung für das Fahrzeug wird durch einen Authentikationsvorgang mit drahtloser Datenkommunikation zwischen den fahrzeugseitigen Schließsteuermitteln und dem Authentikationselement geprüft, z.B. über eine Funkstrecke im Frequenzband um 433MHz.

Gemäß der Keyless-go-Bedienphilosophie erfolgt eine Authentikationskommunikation der Schließsteuermittel mit einem Authentikationselement ohne weitere Betätigung desselben, wenn sich dieses innerhalb eines vorgebbaren Erfassungsbereichs von zu diesem Zweck vorgesehenen Erkennungssensoren der Schließsteuermittel befindet. Die Authentikationselement-Erkennungssensoren sind ebenfalls von herkömmlichem Aufbau und beinhalten typischerweise je eine Antenneneinheit, deren sogenannter Fangbereich den Erfassungsbereich bildet und über die von den Schließsteuermitteln ein den Erfassungsbereich abdeckendes Abfragesignal abgestrahlt und von diesem gesendete Authentikationsantwortsignale empfangen werden. Im betrachteten Beispiel sind ein erster Erkennungssensor mit einer ersten Antenne, deren Fangbereich einen vor allem einen Fahrerseitenbereich abdeckenden ersten Erfassungsbereich A bildet, ein zweiter Erkennungssensor mit einer zweiten Antenne, deren Fangbereich einen vor allem einen Beifahrerseitenbereich abdeckenden zweiten Erfassungsbereich B bildet, ein dritter Erkennungssensor mit einer dritten Antenne, deren Fangbereich einen vor allem einen Fahrgastraum abdeckenden dritten Erfassungsbereich C bildet, ein vierter Erkennungssensor mit einer vierten Antenne, deren Fangbereich einen vor allem einen Kofferraum abdeckenden vierten Erfassungsbereich D bildet, und ein fünfter Erkennungssensor mit einer fünften Antenne vorgesehen, deren Fangbereich einen vor allem einen hinteren Heckdeckelbereich abdeckenden fünften Erfassungsbereich E bildet. Mit dem dritten, fahrgastraumbezogenen Erkennungssensor kann insbesondere erkannt werden, ob ein Fahrzeugnutzer mit berechtigendem Authentikationselement im Fahrzeug Platz genommen hat, was zusätzlich zur Schließanlagenfunktion für eine analoge Keyless-go-Ansteuerung einer elektronischen Wegfahrsperre genutzt werden kann. Mit dem vierten, kofferraumbezogenen Erkennungssensor kann ein etwa versehentlich im Kofferraum abgelegtes Authentikationselement erkannt werden. Damit läßt sich vermeiden, daß ein berechtigendes Authentikationselement versehentlich im Kofferraum eingeschlossen wird.

Wie beispielhaft und schematisch in Fig. 1 gezeigt, überlappt der fahrgastraumbezogene, dritte Erfassungsbereich C seitlich zum einen mit dem fahrerseitigen, ersten Erfassungsbereich A und zum anderen mit dem beifahrerseitigen, zweiten Erfassungsbereich B unter Bildung entsprechender Überlappungsbereiche A∧C bzw. B∧C. Außerdem überlappt der vierte, kofferraumbezogene Erfassungsbereich D mit dem heckdeckelbezogenen, fünften Erfassungsbereich E unter Bildung eines entsprechenden Überlappungsbereichs D∧E.

Da bekanntermaßen gewünscht ist, daß je nachdem, in welchem Bereich innerhalb des Fahrzeugs 1 und der äußeren Fahrzeugumgebung sich ein berechtigendes Authentikationselement befindet, unterschiedliche Schließsteuerbefehle und ggf. auch unterschiedliche Wegfahrsperrbefehle erzeugt werden, besteht an die fahrzeugseitigen Schließ- und ggf. Wegfahrsperren-Steuermittel die Anforderung, feststellen zu können, ob und ggf. in welchem oder welchen der Erfassungsbereiche A bis E sich ein berechtigendes Authentikationselement befindet. Dies leistet das gezeigte System in relativ einfacher Weise durch eine spezielle Gestaltung der Datenprotokolle der über die Erkennungssensorantennen abgestrahlten Abfragedatensignale und des vom jeweiligen Authentikationselement ggf. zurückgesendeten Authentikationsantwortsignals, wie nachfolgend für ein vorteilhaftes Ausführungsbeispiel unter Bezugnahme auf Fig. 2 erläutert wird.

Fig. 2 zeigt vier zeitsynchron übereinanderliegende Signaldiagramme, von denen die drei oberen Diagramme je ein Abfragedatensignal A1, A2, A3 dreier verschiedener Erkennungssensoren wiedergeben, wie sie von deren jeweiliger Antenneneinheit abgestrahlt werden, während das unterste Diagramm ein Authentikationsantwortsignals eines Authentikationselementes zeigt. Wie daraus erkennbar, senden die Erkennungssensoren über ihre Artennen zunächst synchron ein Trägersignal 2 zum Kommunikationsaufbau mit einem eventuell in ihrem Erfassungsbereich befindlichen Authentikationselement aus, bis dieses, wenn es in einem oder mehreren der Erfassungsbereiche vorliegt, sicher geweckt wird, wie mit einem Restträgersignalanteil 2a des Authentikationsantwortsignals repräsentiert.

Im Anschluß an diesen Kommunikationsaufbauteil der Signale folgt ein der Antennenerkennung dienender Datenprotokollbereich, der bei den Abfragedatensignalen A1, A2, A3 einen sensor- bzw. antennenspezifisch codierten Datenprotokollbereich und beim Authentikationsantwortsignal S einen sensorindikativen Datenprotokollbereich 4 bildet. Jede Antenneneinheit sendet innerhalb dieses sensorspezifisch codierten Datenprotokollbereichs ihres Abfragedatensignals einen Kennungsdatenblock 3a, 3b, 3c in einem jeweils ihr eigens zugewiesenen Zeitbereich, der sich nicht mit den Zeitbereichen der Kennungsdatenblöcke der anderen Antenneneinheiten bzw. Erkennungssensoren überschneidet. Abhängig von seiner Position innerhalb des Fahrzeugs 1 oder in dessen Außenumgebung empfängt ein Authentikationselement genau die Kennungsdatenblöcke derjenigen Erkennungssensoren, in deren Erfassungsbereich es sich befindet. Anhand des für den jeweiligen Erkennungssensor charakteristischen Zeitabstands des Kennungsdatenblocks 3a, 3b, 3c zum vorausgegangenen Aufbauträgersignal 2 ist das Authentikationselement durch entsprechende Mittel in der Lage, den oder die Erkennungssensoren zu identifizieren, in deren Erfassungsbereich es sich befindet. Diese Information überträgt es direkt an den fahrzeugseitigen Systemteil zurück, indem es gerade die empfangenen Kennungsdatenblöcke in den sensorindikativen Datenprotokollbereich 4 seines Authentikationsantwortsignals einbaut.

Im Beispiel von Fig. 2 ist dazu angenommen, daß sich das Authentikationselement in den Erfassungsbereichen der drei Erfassungssensoren befindet, deren Abfragedatensignale gezeigt sind. Dementsprechend baut das Authentikationselement die Kennungsdatenblöcke 3a, 3b, 3c dieser drei Erkennungssensoren zeitentsprechend in den sensorindikativen Datenprotokollbereich 4 seines Authentikationsantwortsignals ein. Drei weitere Blockplätze 5 innerhalb des sensorindikativen Datenprotollbereichs 4 bleiben in diesem Beispiel leer bzw. enthalten eine Nichtempfangs-Information, d.h. es ist angenommen, daß drei weitere Erkennungssensoren existieren, in deren Erfassungsbereiche sich das Authentikationselement nicht befindet. Ein Abschlußblock 6 stellt dann das Ende des sensorindikativen Datenprotokollbereichs 4 des Authentikationsantwortsignals dar. Das Authentikationselement sendet die im sensorindikativen Datenprotokollbereich 4 aufgebaute Information über denjenigen oder diejenigen Erkennungssensoren, von denen es Abfragedatensignale empfangen hat, zum fahrzeugseitigen Systemteil zurück, der daraus durch entsprechende Mittel ermitteln kann, in welchem oder welchen Erfassungsbereichen seiner Erkennungssensoren sich das antwortende Authentikationselement befindet.

Anschließend erfolgt dann der eigentliche Authentikationsvorgang, d.h. die Prüfung, ob es sich um ein für das betreffende Fahrzeug 1 berechtigendes Authentikationselement handelt. Dazu läuft ein bidirektionaler Datenaustausch zwischen dem fahrzeugseitigen Systemteil über wenigstens eine der Antenneneinheiten, in deren Erfassungsbereich das Authentikationselement erkannt wurde, und dem Authentikationselement ab. Im Beispiel von Fig. 2 wickelt der fahrzeugseitige Systemteil die Authentikationskommunikation über diejenige Antenneneinheit ab, die zum zweitobersten Abfragedatensignaldiagramm gehört. Die Authentikationskommunikation beginnt mit der Absendung einer Identifizierungsinformation 7 durch den fahrzeugseitigen Systemteil. Das Authentikationselement antwortet darauf in seinem Authentikationsantwortsignal mit einer Antwort-Identifizierungsinformation 8. Daraufhin erfolgt die eigentliche Berechtigungsprüfung unter Verwendung eines vorzugsweise hochsicheren krypthographischen Verfahrens, z.B. unter Verwendung einer Hashfunktion oder einer anderen sogenannten Einwegfunktion. Dazu sendet der fahrzeugseitige Systemteil eine Zufallszahlinformation 9 an das Authentikationselement, das mit einem unter Verwendung der empfangenen Zufallszahlinformation 9 ermittelten Hashfunktionswert 10 antwortet, der im fahrzeugseitigen Systemteil in an sich bekannter Weise daraufhin ausgewertet werden kann, ob das betreffende Authentikationselement für dieses Fahrzeug gültig ist, d.h. ob der das Authentikationselement mitführende Benutzer berechtigt ist, das Fahrzeug zu betreten und ggf. zu nutzen. Demgemäß erzeugt der fahrzeugseitige Systemteil je nachdem, ob das Authentikationselement als berechtigt erkannt wurde oder nicht, entsprechende Schließsteuerbefehle und ggf. Wegfahrsperrsteuerbefehle.

Wie am Beispiel von Fig. 2 deutlich wird, genügt bei der erfindungsgemäßen Schließanlage pro Authentikationselement-Suchvorgang ein einmaliges Erzeugen des Authentikationsanwortsignals durch ein erkanntes Authentikationselement, d.h. auf Seiten des Authentikationselementes braucht pro Suchvorgang nur einmal der sensorindikative Datenprotokollbereich 4 gesendet zu werden, der in Form der sensorspezifischen Kennungsdatenblöcke die Information über diejenigen Erkennungssensoren enthält, von denen es Abfragedatensignale empfangen hat. Ebenso genügt eine einmalige Authentikationskommunikation mit dem fahrzeugseitigen Systemteil über einen der Erkennungssensoren, in dessen Erfassungsbereich das Authentikationselement liegt. Dieses somit nur einmal nötige Antworten des Authentikationselementes pro Suchvorgang hält dessen Energieverbrauch gering und erhöht im Fall, daß das Authentikationselement von einer Batterie gespeist wird, deren Lebensdauer. Gleichzeitig verkürzt sich gegenüber herkömmlichen Systemen mit serieller Erfassungsbereichabfrage durch die verschiedenen Erkennungssensoren die Dauer des Authentikationselement-Suchvorgangs deutlich. Denn die sensorspezifischen Kennungsdatenblöcke können sehr viel kürzer gehalten werden als der Authentikationsprotokollanteil, so daß die Signallänge des der Antennenerkennung dienenden Datenprotokollanteils, d.h. des sensorspezifisch codierten Datenprotokollbereichs der fahrzeugseitig abgestrahlten Abfragedatensignale und des sensorindikativen Datenprotokollbereichs 4 des vom Authentikationselement gesendeten Authentikationsantwortsignals, noch immer deutlich kürzer ist als seriell hintereinandergeschaltete, volle Authentikationskommunikationsvorgänge zwischen den verschiedenen fahrzeugseitigen Erkennungssensoren und dem Authentikationselement ohne einen solchen Datenprotokollanteil.

Es versteht sich, daß die erfindungsgemäße Schließanlage nicht nur zur Sicherung von Fahrzeugen, sondern auch von beliebigen anderen Objekten, auch stationären Objekten, verwendbar ist, bei denen ein oder mehrere Zutrittselemente durch eine Schließanlage mit Schließsteuermitteln gesichert werden, deren Aktivierung das Vorhandensein eines berechtigenden Authentikationselementes voraussetzt. Dessen Berechtigung von den Schließsteuermitteln wird durch eine drahtlose Authentikationskommunikation geprüft. Wenngleich ein Hauptanwendungsgebiet der Erfindung Keyless-go-Systeme sind, so eignet sie sich grundsätzlich auch für andere elektronische Schließanlagen, z.B. solche mit von Hand zu betätigenden elektronischen Schlüsseln, und zudem nicht nur für Schließanlagen, sondern auch für andere Sicherungsanlagen, bei denen die Art des jeweils erzeugten Sicherungssteuerbefehls von der Position des erkannten Authentikationselementes abhängig ist.

## Patentansprüche

1. Elektronische Sicherungsanlage, insbesondere Fahrzeugschließanlage, mit
- mehreren, an einem zu sichernden Objekt angeordneten Sicherungseinheiten,
- wenigstens einem berechtigenden Authentikationselement und
- Sicherungssteuermitteln mit mehreren objektseitigen Authentikationselement-Erkennungssensoren mit Signalsendemitteln zur Abstrahlung eines jeweiligen Abfragedatensignals (A1 bis A3) in einem zugehörigen Erfassungsbereich (A bis E), das von einem Authentikationselement empfangbar ist, wenn sich dieses im betreffenden Erfassungsbereich (A bis E) befindet, wobei das Authentikationselement Mittel zum Zurücksenden eines Authentikationsantwortsignals (S) aufweist,
wobei die von den Authentikationselement-Erkennungssensoren abgestrahlten Abfragedatsignale (A1 bis A3) jeweils einen mit sensorspezifischer Kennungsinformation codierten Datenprotokollbereich (3a, 3b, 3c) beinhalten, der einen Kennungsdatenblock umfasst, der für die verschiedenen Erkennungssensoren an verschiedenen Stellen innerhalb des betreffenden Datenprotokollbereichs liegt, und
wobei das Authentikationselement Mittel zur Auswertung des mit sensorspezifischer Kennungsinformation codierten Datenprotokollbereichs empfangener Abfragedatensignal (A1 bis A3) und zur Erzeugung eines Authentikationsantwortsignals (S) aufweist, das einen sensorindikativen, von den Sicherungssteuermitteln auswertbaren Datenprotokollbereich (4) beinhaltet, der mit der Information codiert ist, von welchen Erkennungssensoren das Authentikationselement ein Abfragedatensignal (A1 bis A3) empfangen hat,
**dadurch gekennzeichnet, dass**
der sensorindikative Datenprotokollbereich (4) des Authentikationsantwortsignals (S) aus den Kennungsdatenblöcken (3a, 3b, 3c) des oder der empfangenen Abfragedatensignale (A1 bis A3) zeitrichtig und codeabhängig gebildet ist, wobei der sensorindikative Datenprotokollbereich (4) des Authentikationsantwortsignals (S) aus Datensignalblöcken aufgebaut ist, die in ihrer Datenprotokollposition derjenigen eines jeweils zugehörigen Kennungsdatenblocks (3a, 3b, 3c) empfangener Abfragedatensignale (A1 bis A3) entsprechen.

2. Elektronische Sicherungseinrichtung nach Anspruch 1,
**dadurch gekennzeichnet, dass**
die Kennungsdatenblöcke (3a, 3b, 3c) verschiedener Erkennungssensoren an voneinander separierten Stellen innerhalb des mit sensorspezifischer Kennungsinformation codierten Datenprotokollbereichs liegen.

3. Elektronische Sicherungseinrichtung nach Anspruch 1 oder 2,
**dadurch gekennzeichnet, dass**
bei einem in einem Überlappungsbereich mehrerer Erfassungsbereiche (A bis E) liegenden Authentikationselement der sensorindikative Datenprotokollbereich (4) des Authentikationsantwortsignals diejenigen Kennungsdatenblöcke (3a bis 3c) zeitenstsprechend beinhaltet, für die ein Abfragedatensignal (A1 bis A3) empfangen wurde.

## Claims

1. Electronic security system, especially vehicle locking system, comprising:
- a plurality of security units arranged on an object to be secured, and
- at least one authorizing authentication element, and
- security control means with a plurality of object-side authentication element identification sensors with signal transmitting means for emitting a respective interrogation data signal (A1 to A3) in an associated detection range (A to E), which can be received by an authentication element if the latter is situated in the relevant detection range (A to E), the authentication element having means for transmitting back an authentication response signal (S),
the interrogation data signals (A1 to A3) emitted by the authentication element identification sensors in each case comprising a data protocol region (3a, 3b, 3c) which is coded with sensor-specific identifier information and which comprises an identifier data block which lies at different locations within the relevant data protocol region for the different identification sensors and
the authentication element having means for evaluating the data protocol region coded with sensor-specific identifier information of received interrogation data signals (A1 to A3) and for generating an authentication response signal (S) comprising a sensor-indicative data protocol region (4) which can be evaluated by the security control means and which is coded with the information regarding from which identification sensors the authentication element has received an interrogation data signal (A1 to A3),
**characterized in that**
the sensor-indicative data protocol region (4) of the authentication response signal (S) is formed temporally correctly and in code-dependent fashion from the identifier data blocks (3a, 3b, 3c) of the received interrogation data signal or signals (A1 to A3), the sensor-indicative data protocol region (4) of the authentication response signal (S) being constructed from data signal blocks which correspond in terms of their data protocol position to that of a respectively associated identifier data block (3a, 3b, 3c) of received interrogation data signals (A1 to A3).

2. Electronic security device according to Claim 1,
**characterized in that**
the identifier data blocks (3a, 3b, 3c) of different identification sensors lie at mutually separated locations within the data protocol region coded with sensor-specific identifier information.

3. Electronic security device according to Claim 1 or 2,
**characterized in that**
in the case of an authentication element lying in an overlap region of a plurality of detection ranges (A to E), the sensor-indicative data protocol region (4) of the authentication response signal comprises in temporally corresponding fashion those identifier data blocks (3a to 3c) for which an interrogation data signal (A1 to A3) was received.

## Revendications

1. Installation électronique de sécurité, en particulier système de fermeture d'un véhicule, avec
- plusieurs unités de sécurité placées sur un objet à protéger,
- au moins un élément d'authentification autorisé et
- des moyens de commande de sécurité avec plusieurs éléments d'authentification-capteurs de reconnaissance côté objet avec des moyens d'émission de signaux pour l'émission d'un signal d'émission d'interrogation (A1 à A3) dans une zone de détection correspondante (A à E), lequel élément peut être reçu par un élément d'authentification, lorsque celui-ci se trouve dans la zone de détection concernée (A à E), l'élément d'authentification présentant des moyens pour le renvoi d'un signal de réponse d'authentification (S), les signaux de données de demande (A1 à A3) émis par l'élément d'authentification-capteurs de reconnaissance contenant respectivement une zone de protocole de données (3a, 3b, 3c) codée avec une information d'identification spécifique aux capteurs, laquelle zone comprend un bloc de données d'identification qui se situe à l'intérieur de la zone de protocole de données concernée pour les différents capteurs d'identification, et l'élément d'authentification présentant des moyens pour l'évaluation de la zone de protocole de données de signaux de données d'interrogation reçus (A1 à A3), codée avec une information d'identification spécifiques aux capteurs et pour la production d'un signal de réponse d'authentification (S), qui contient une zone de protocole de données (4) indicatrice de capteur, pouvant être évaluée par les moyens de commande de sécurité, zone qui est codée avec l'information précisant de quels capteurs de reconnaissance l'élément d'authentification a reçu un signal de donnée d'interrogation (A1 à A3), **caractérisée en ce que** la zone de protocole de données indicatrice de capteur (4) du signal de réponse d'authentification (S) est formée à partir de blocs de données d'identification (3a, 3b, 3c) du ou des signaux de données d'interrogation (A1 à A3) correctement dans le temps et en fonction du code, sachant que la zone de protocole de données (4) indicatrice de capteur du signal de réponse d'authentification (S) est structurée à partir de blocs de signaux de données, qui correspondent dans leur position de protocole de données à celle d'un bloc de données d'identification (3a, 3b, 3c) respectivement correspondant de signaux de données d'interrogation reçus (A1 à A3).

2. Installation électronique de sécurité selon la revendication 1, **caractérisée en ce que** les blocs de données d'identification (3a, 3b, 3c) de différents capteurs de reconnaissance sont situés à des endroits séparés les uns des autres à l'intérieur de la zone de protocole de données codée avec l'information d'identification spécifique aux capteurs.

3. Installation électronique de sécurité selon la revendication 1 ou 2, **caractérisée en ce que** pour un élément d'authentification situé dans une zone de chevauchement de plusieurs zone de détection (A à E), la zone de protocole de données (4) indicatrice de capteur contient les blocs de données d'identification (3a à 3c) en correspondance temporelle pour lesquels un signal de données d'interrogation (A1 à A3) a été reçu.
